# FASCICULE DE BREVET EUROPEEN

(11) **EP 0 436 427 B1**
(45) Date de publication et mention de la délivrance du brevet: **11.10.1995**
(21) Numéro de dépôt: 90403729.8
(22) Date de dépôt: 21.12.1990
(51) Int. Cl.: B23Q 11/10, F16C 17/14, F16C 33/10, F16C 35/10

(54) **Perfectionnement aux machines d'usinage à broche ou outil rotatif**
Bearbeitungsmaschine mit Spindel oder rotierendem Werkzeug
Machine tool with spindle or rotary tool

(30) Priorité: 28.12.1989 FR 8917323
(43) Date de publication de la demande: 10.07.1991
(73) Titulaire: RENAULT AUTOMATION, 92109 Boulogne Billancourt (FR)
(72) Inventeur: Gaulier, Jean Claude Emile, F-81090 Burlats (FR)
(74) Mandataire: Ernst-Schonberg, Michel

(56) Documents cités:
- EP-A- 0 188 664
- FR-A- 2 300 644
- GB-A- 1 179 045
- GB-A- 2 177 629
- US-A- 1 389 414
- US-A- 3 104 921
- US-A- 3 240 541

## Description

L'invention concerne une machine d'usinage de trous, d'alésages ou de lamages dans des blocs de métal conforme au préambule de la revendication 1.

Pour cet usinage on se sert de machines à broches rotatives portant au moin un outil de coupe conformes au préambule de la revendication 1.

Il est usuel de lubrifier ces paliers au moyen d'une circulation d'huile et l'on prévoit des joints pour éviter des fuites d'huile, celle-ci étant généralement récupérée après filtration.

On a constaté que pendant l'usinage il se produit des vibrations qu'il est impossible de maîtriser et qui nuisent à la précision. Or la précision recherchée est devenue très importante dans la technique moderne. Par exemples dans les boîtes de vitesses d'automobiles les paliers des arbres portant les engrenages demandent un parfait état de surface et une tolérance de diamètre très fine avec une précision de plus ou moins 1/100 mm pour les entraxes. Les vibrations sont un obstacle à l'obtention d'une telle précision et d'un bon état de surface.

La publication FR-A-2300644 décrit une broche rotative portant au moins un outil de coupe et tournant dans des paliers lubrifiés à l'eau réalisés par des portées de métal sur caoutchouc.

La présente invention vise une amélioration de la distribution d'eau au contact des portées du palier.

Ce problème trouve sa solution dans la caractéristique de la revendication.

On obtient de la sorte non seulement les avantages de simplification des paliers et d'une plus grande facilité pour maintenir constante la température de la broche mais aussi celui d'augmenter la précision d'usinage, résultat expérimental qui n'était pas prévisible. Les jeux du palier, adaptés aux caractéristiques physiques de l'eau, peuvent être plus petits que dans le cas du lubrifiant habituel à base d'huile, ce qui est encore un avantage au point de vue de la précision.

Que le palier soit fixe ou qu'il soit muni d'une pièce intérieure tournante, on prévoira sur lui une tubulure d'arrivée d'eau munie de préférence d'un canal circulaire pour mener l'eau en circulation centripète sur la surface active du palier, ce canal communiquant avec des rainures réparties sur ladite surface et des orifices étant prévus pour l'évacuation de l'eau qui pourra être récupérée avec le fluide de coupe.

Un dispositif de refroidissement ou au contraire de chauffage de l'eau sera de préférence prévu pour que l'eau introduite dans le palier ait et conserve une température bien déterminée, de l'ordre par exemple de 20°C. La pression de l'eau doit être suffisante pour permettre sa circulation dans le palier. Une valeur de 1 à 3 bars peut convenir.

La description qui va suivre, en regard des dessins annexés, donnée à titre d'exemple non limitatif, fera bien comprendre comment l'invention peut être réalisée.

Les figures 1, 2 et 3 représentent en coupe axiale des réalisations différentes de paliers à eau conformes à l'invention.

La figure 4 représente également en coupe axiale une broche d'usinage disposée et guidée dans deux paliers.

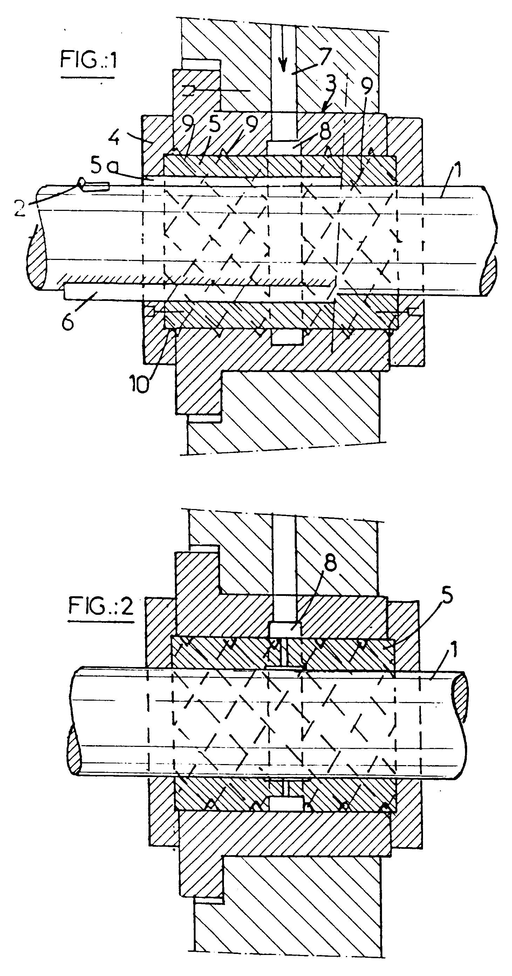

Sur la figure 1, on voit en 1 une broche d'usinage qui porte un ou plusieurs outils de coupe 2 convenablement placés sur sa longueur. On voit aussi un palier 3 qui se compose d'une enveloppe fixe 4 à l'intérieur de laquelle se trouve une bague 5 fixée sur la broche 1 de manière à tourner avec elle, cette fixation pouvant se faire au moyen d'une clavette 6 ou encore par emmanchement dur, par collage ou par vissage. Une rainure 5a est prévue pour permettre le passage de l'outil 2 quand on enfile la broche dans le palier.

Une tubulure d'arrivée d'eau 7 traverse l'enveloppe 4 et débouche dans un canal circulaire 8 qui entoure la bague 5. Cette eau peut être additionnée d'huile soluble dans la même proportion que l'eau servant à arroser l'endroit où travaille l'outil. Au moyen d'un dispositif non figuré elle est maintenue à une température constante de l'ordre de 20°C par exemple.

Des rainures 9 hélicoïdales sont prévues sur l'interface enveloppe 4-bague 5. Ces rainures peuvent être tracées soit sur la face interne de l'enveloppe 4, soit sur la face externe de la bague 5, soit sur les deux. Elles communiquent avec le canal circulaire 8 et assurent par conséquent l'arrivée de l'eau sur toute l'interface susdite. Un ou plusieurs orifices tels que 10 assurent l'évacuation de l'eau qui peut être recueillie et filtrée pour être réutilisée.

Dans la variante de réalisation de la figure 2, la disposition est sensiblement la même mais la bague 5 est supposée collée ou emmanchée à force sur la broche 1.

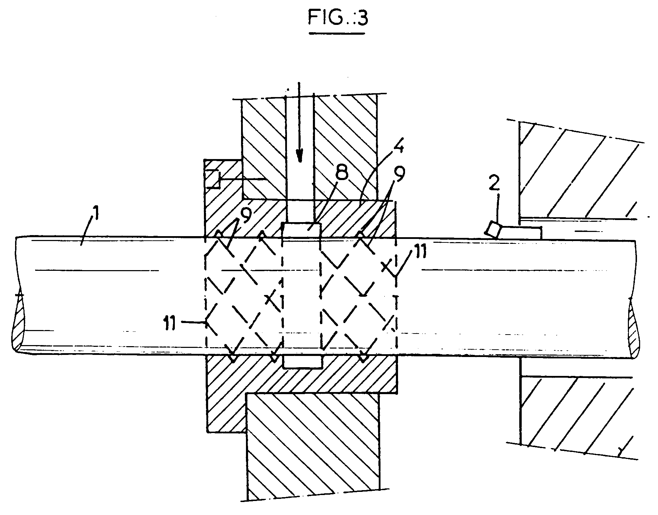

Dans le cas de la figure 3, le palier ne comporte pas de partie tournante, la bague 5 étant par conséquent supprimée. La disposition générale reste la même, mais on remarque que les rainures hélicoïdales pratiquées sur la surface intérieure de la partie fixe 4 du palier débouchent directement à l'extérieur en 11.

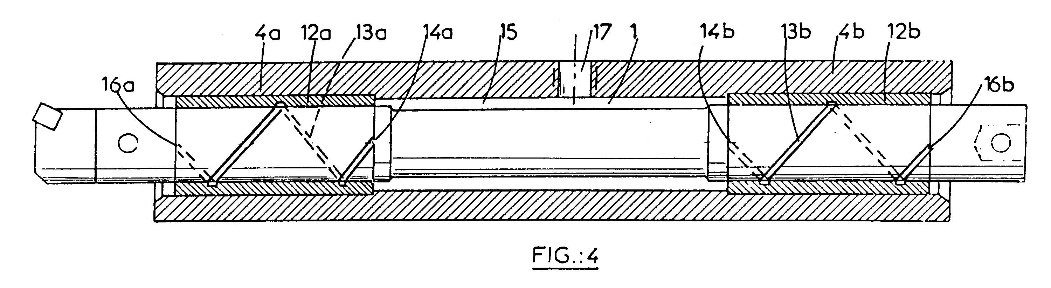

Sur la figure 4, on voit une broche 1 qui est guidée dans deux paliers 4a-4b.

Chacun de ces paliers comporte un manchon fixe 12a-12b qui est traversé par la broche et qui est muni d'une rainure hélicoïdale 13a-13b sur l'interface broche-manchon. Cette rainure (il pourrait d'ailleurs y en avoir plusieurs disposées en parallèle) s'ouvre en 14a-14b dans l'espace annulaire 15 situé entre la broche et l'enveloppe et débouche à l'extérieur en 16a-16b.

L'eau amenée par une tubulure centrale 17 pénètre en 14a-14b dans les rainures et s'en échappe en 16a-16b.

Comme dans les modes de réalisation précédents, il n'y a pas de joint sur la broche pour permettre la récupération de l'eau.

## Revendications

1. Machine d'usinage comportant une broche (1) rotative portant au moins un outil de coupe (2) et tournant dans des paliers lisses (3, 4a, 4b), qui comportent une partie fixe (4, 12a, 12b) et une partie tournante (1, 5) et qui sont lubrifiés par de l'eau, de préférence additionnée d'huile soluble, caractérisée en ce que
- l'eau de circulation dans le palier et l'eau d'arrosage de la pièce en usinage à l'endroit où travaille l'outil peuvent être identiques ;
- l'eau est amenée à circuler dans le palier et est dirigée vers l'extérieur par un réseau de canaux (9, 13a, 13b) aménagés sur les interfaces des pièces en rotation relative (1, 4, 5, 12a, 12b) pour assurer notamment la lubrification et le refroidissement du palier et la récupération de l'eau en l'absence de joint d'étanchéité sur la broche.

2. Machine d'usinage selon la revendication 1, caractérisée en ce que les canaux (9, 13a, 13b) sont tracées dans la portée de broche et/ou le palier sous forme de rainures, de préférence hélicoïdales constituant des chemins continus de distribution et de circulation de l'eau entre la tubelure (7, 17) destiné à son admission et le ou les orifices d'évacuation de l'eau (10, 16a, 16b)

## Claims

1. Machining centre comprising a rotary spindle (1) carrying at least one cutting tool (2) and turning in smooth bearings (3, 4a, 4b) which comprise a fixed part (4, 12a, 12b) and a turning part (1, 5) and which are lubricated with water, preferably with the addition of soluble oil, characterised in that
- the water circulating in the bearing and the water for spraying the piece being machined at the place where the tool is working can be identical;
- the water is made to circulate in the bearing and is directed towards the exterior by a network of channels (9, 13a, 13b) made in the interfaces of pieces rotating relatively (1, 4, 5, 12a, 12b) to ensure in particular the lubrication and cooling of the bearing and the recovery of the water in the absence of a sealing gasket on the spindle.

2. Machining centre according to claim 1, characterised in that the channels (9, 13a, 13b) are made in the supporting surface of the spindle and/or the bearing, in the form of grooves, preferably helical, constituting continuous pathways for the distribution and circulation of the water between the tube (7, 17) for admission thereof and the orifices or orifices for removal of the water (10,16a, 16b).

## Patentansprüche

1. Bearbeitungsmaschine mit einer rotierenden Spindel (1), die wenigstens ein Schneidwerk (2) trägt und sich in Gleitlagern (3, 4a, 4b) dreht, welche einen feststehenden Abschnitt (4, 12a, 12b) und einen sich drehenden Abschnitt (1, 5) aufweisen, die mit Wasser, dem vorzugsweise ein lösliches Öl hinzugefügt ist, geschmiert werden, dadurch gekennzeichnet, daß
- das Umlaufwasser im Lager und das Spülwasser des zu bearbeitenden Teils am Angriffsort des Werkzeugs identisch sein können,
- das Wasser zum Umlauf im Lager gebracht wird und nach außen geleitet wird durch einen Netz von Kanälen (9, 13a, 13b), die an den Grenzflächen der sich relativ zueinander drehenden Teile (1, 4, 5, 12a, 12b) ausgebildet sind, um insbesondere die Schmierung und Kühlung des Lagers zu gewährleisten, sowie die Wiedergewinnung des Wassers bei Abwesenheit einer Dichtung an der Spindel.

2. Bearbeitungsmaschine nach Anspruch 1, dadurch gekennzeichnet, daß die Kanäle (9, 13a, 13b) im Umfangsbereich der Spindel und/oder des Lagers in Form von Nuten, vorzugsweise spiralförmigen, eingearbeitet sind, welche durchgehende Verteil- und Umlaufleitungen für das Wasser bilden zwischen dem der Zufuhr dienenden Kanal (7, 17) und der oder den Wasserabfuhröffnungen (10, 16a, 16b).
